Europäisches Patentamt

European Patent Office

Office européen des brevets

(11) Veröffentlichungsnummer: **0 367 047**
**A2**

# EUROPÄISCHE PATENTANMELDUNG

(21) Anmeldenummer: 89119540.6

(22) Anmeldetag: 20.10.89

(51) Int. Cl.5: **G01N 23/20** , **B01L 3/00**

(30) Priorität: 03.11.88 DE 8813765 U

(43) Veröffentlichungstag der Anmeldung:
09.05.90 Patentblatt 90/19

(84) Benannte Vertragsstaaten:
**DE ES FR GB IT NL SE**

(71) Anmelder: **KRUPP POLYSIUS AG**
**Graf-Galen-Strasse 17**
**D-4720 Beckum(DE)**

(72) Erfinder: **Beltrop, Herbert, Dipl.-Ing.**
**Spichernstrasse 48**
**D-4700 Hamm(DE)**

(74) Vertreter: **Tetzner, Volkmar, Dr.-Ing. Dr. jur.**
**Van-Gogh-Strasse 3**
**D-8000 München 71(DE)**

(54) **Probenkassette.**

(57) Die Erfindung betrifft eine Kassette zur Aufnahme einer Materialprobe, wobei zur Halterung der Probe im Gehäuse Stützkörper sowie ein Federelement vorgesehen sind.

EP 0 367 047 A2

# Probenkassette

Die Erfindung betrifft eine Probenkassette (entsprechend dem Oberbegriff des Anspruches 1 ), und insbesondere zur Eingabe einer Schmelzprobe in ein Röntgenspektrometer.

Eine bekannte Probenkassette besteht aus einem ringförmigen Gehäuse, in das die Probe von der einen Breitseite eingelegt wird, wobei die Sicherung der Probe in der Kassette mittels einer Haltefeder erfolgt, die durch eine Drehbewegung um 90° in der Kassette arretiert wird.

Nachteilig ist bei dieser bekannten Ausführung, daß sie nicht für eine einfache Probenmontage durch Roboter geeignet ist. Für die vollautomatische Eingabe einer Schmelzprobe in ein Röntgenspektrometer ist jedoch eine einfache,durch Roboter zu bewerkstelligende Montage der Probe in der Probenkassette eine wichtige Voraussetzung.

Der Erfindung liegt daher die Aufgabe zugrunde, eine Probenkassette entsprechend im Oberbegriff des Anspruches 1 so auszubilden, daß die Probe auf einfache Weise, insbesondere vollautomatisch mittels eines Roboters, in die Kassette eingelegt werden kann und zuverlässig in der Kassette fixiert ist.

Diese Aufgabe wird erfindungsgemäß durch die kennzeichnenden Merkmale des Anspruches 1 gelöst. Zweckmäßige Ausgestaltungen der Erfindung sind Gegenstand der Unteransprüche.

Ein Ausführungsbeispiel der Erfindung ist in der Zeichnung schematisch veranschaulicht. Es zeigen:

Figur 1: einen hälftigen Vertikalschnitt durch eine Probenkassette mit eingelegter Probe,

Figur 2: einen hälftigen Horizontalschnitt längs der Linie II-II der Figur 1.

Die in der Zeichnung veranschaulichte Probenkassette dient zur Eingabe einer Schmelzprobe 1 in ein Röntgenspektrometer. Sie besteht im wesentlichen aus einem Gehäuse 2, einer Anzahl von Ringsegmenten 3, einer Schraubenfeder 4 und einem Deckel 5.

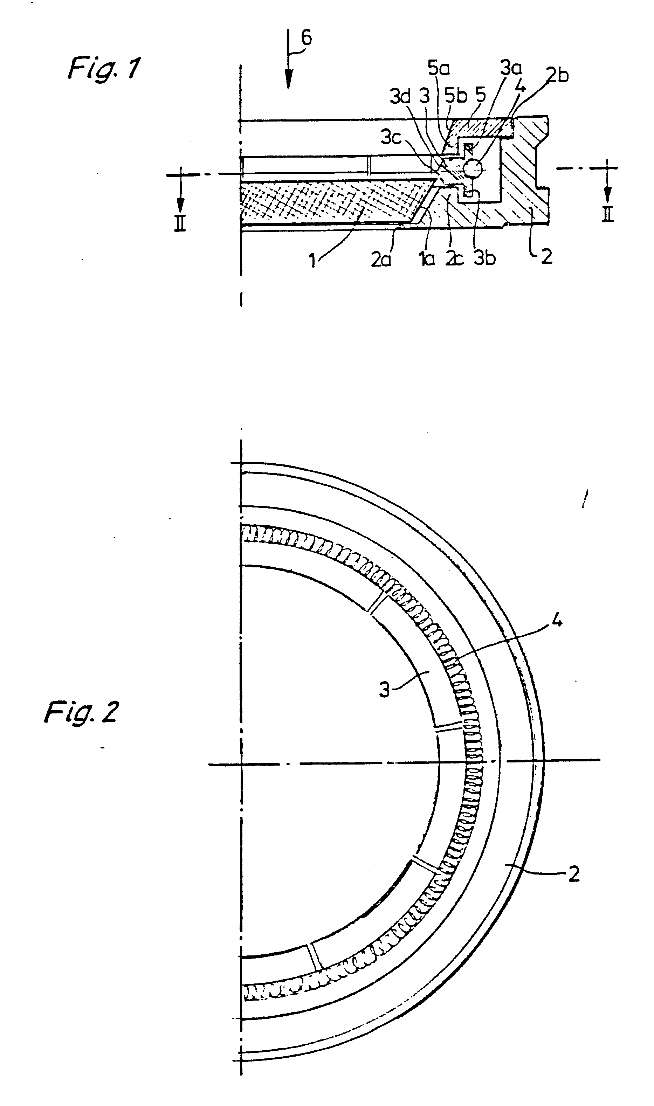

Das Gehäuse 2 ist ringförmig ausgebildet und nach beiden Breitseiten hin offen. Im Bereich der einen ( in Figur 1 unteren ) Breitseite enthält das Gehäuse 2 eine kreisförmige Öffnung 2 a, deren Durchmesser etwas kleiner als der Durchmesser der Probe 1 ist. Im Bereich der anderen Breitseite ist das Gehäuse 2 mit einer Öffnung 2 b versehen, deren Durchmesser wesentlich größer als der Durchmesser der Probe 1 ist und die zur Aufnahme des Deckels 5 dient.

Die Ringsegmente 3, von denen beispielsweise 9 Stück gleichmäßig über den gesamten Umfang verteilt sind, sind im Gehäuse 2 in radialer Richtung ( und damit quer zur Einführrichtung der Probe 1 ) beweglich. Sie werden durch die am äußeren Umfang der Ringsegmente 3 anliegende Schraubenfeder 4 radial nach innen gedrückt.

Der Deckel 5 ist gleichfalls ringförmig ausgebildet und besitzt einen in Richtung auf die Ringsegmente 3 weisenden Bund 5a. Das Gehäuse 2 ist dem Bund 5a gegenüberliegend mit einem Bund 2 c versehen.

Die Ringsegmente 3 weisen auf ihrer Außenseite eine Verbreiterung in Form zweier ringförmiger Ansätze 3a, 3b auf, mit denen sie an den Bunden 5a bzw. 2c des Deckels 5 bzw. des Gehäuses 2 zur Anlage kommen, wenn sich keine Probe im Gehäuse 2 befindet.

Zur Einführung der Probe 1 in das Gehäuse 2 wird das Gehäuse 2 in die in Figur 1 veranschaulichte, gewendete Lage gebracht, so daß die beispielsweise von einem Roboter mittels eines Saugers gefaßte Probe 1 von oben ( in Richtung des Pfeiles 6) in das Gehäuse 2 der Probenkassette eingeführt werden kann . Hierbei weichen die Ringsegmente 3 so weit nach außen aus, daß die Probe 1 die Innenkante 3c der Ringsegmente 3 passieren kann. Liegt die Probe 1 dann auf dem die Öffnung 2a begrenzenden Teil des Gehäuses 2 auf, so hintergreifen die Ringsegmente 3 die Probe 1 und sichern sie zuverlässig in ihrer Lage im Gehäuse.

Das Gehäuse 2 mit der eingesetzten Probe 1 kann dann durch den Roboter gewendet, auf ein Transportband gelegt und dem Röntgenspektrometer zugeführt werden.

Wie aus Figur 1 hervorgeht, ist der äußere Umfang 1a der Probe 1 kegelstumpfförmig ausgebildet. Der Deckel 5 und die Ringsegmente 3 besitzen gleichfalls kegelstumpfförmige innere Mantelflächen 5b bzw. 3d. Auf diese Weise ist es möglich, die Probe 1 mit leichtem Druck in das Gehäuse 2 einzuführen, wobei die Ringsegmente 3 elastisch ausweichen, bis sie die Probe fest und maßgenau im Gehäuse 2 der Probenkassette verriegeln.

## Ansprüche

1. Kassette zur Aufnahme einer Materialprobe,enthaltend:

a) ein nach beiden Breitseiten hin offenes Gehäuse (2), das. im Bereich der einen Breitseite eine Öffnung (2a) aufweist, deren Weite etwas kleiner als der Durchmesser der Probe (1) ist und das im Bereich der anderen Breitseite mit einer Öffnung (2b) versehen ist, deren Weite größer als der Durchmesser der Probe ist,

b) eine mit einem Federelement (4) versehene Einrichtung zur Halterung der Probe (1) im Gehäuse (2),
dadurch gekennzeichnet, daß die Einrichtung zur Halterung der Probe (1) im Gehäuse (2) folgende Elemente aufweist:
c) eine Anzahl quer zur Einführrichtung (Pfeil 6) der Probe (1) beweglicher Stützkörper, die die Probe im eingeführten Zustand hintergreifen,
d) wenigstens ein die Stützkörper nach innen drükkendes Federelement (4),
e) einen die Stützkörper und das Federelement (4) im Gehäuse (2) sichernden Deckel (5), der eine zur Einführung der Probe in das Gehäuse bestimmte Öffnung (5a) aufweist.

2. Kassette nach Anspruch 1, dadurch gekennzeichnet, daß das Gehäuse (2) und der Deckel (5) ringförmig ausgebildet sind und die Stützkörper durch Ringsegmente (3) gebildet werden.

3. Kassette nach den Ansprüchen 1 und 2, dadurch gekennzeichnet, daß das Federelement (4) durch eine am äußeren Umfang der Ringsegmente (3) anliegende, ringförmig geschlossene Schraubenfeder (4) gebildet wird.

4. Kassette nach den Ansprüchen 1 und 2 für eine Probe, deren Umfang kegelstumpfförmig ausgebildet ist, dadurch gekennzeichnet, daß der innere Umfang der Ringsegmente (3) gleichfalls eine kegelstumpfförmige Mantelfläche aufweist.

Fig. 1

Fig. 2